(19) Europäisches Patentamt / European Patent Office / Office européen des brevets

(11) **EP 3 458 622 B1**

(12) **FASCICULE DE BREVET EUROPEEN**

(45) Date de publication et mention de la délivrance du brevet:
**08.07.2020 Bulletin 2020/28**

(21) Numéro de dépôt: **17723711.2**

(22) Date de dépôt: **18.05.2017**

(51) Int Cl.:
*C22C 30/00* (2006.01)      *C22C 13/00* (2006.01)
*C22C 14/00* (2006.01)      *C22C 19/03* (2006.01)
*H01M 4/134* (2010.01)      *H01M 4/1395* (2010.01)

(86) Numéro de dépôt international:
**PCT/EP2017/062046**

(87) Numéro de publication internationale:
**WO 2017/198795 (23.11.2017 Gazette 2017/47)**

(54) **NOUVEAU MATERIAU COMPOSITE ENRICHI EN SILICIUM, SON PROCEDE DE FABRICATION ET SON UTILISATION A TITRE D'ELECTRODE**

NEUER, MIT SI ANGEREICHERTER KOMPOSITWERKSTOFF, HERSTELLUNGSPROZESS UND VERWENDUNG ALS ELEKTRODE

NEW COMPOSITE MATERIAL ENRICHED WITH SI, PRODUCTION METHOD THEREOF AND USE AS ELECTRODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.05.2016 FR 1654484**

(43) Date de publication de la demande:
**27.03.2019 Bulletin 2019/13**

(73) Titulaires:
• **Centre National d'Etudes Spatiales**
  **75001 Paris (FR)**
• **SAFT**
  **93170 Bagnolet (FR)**
• **Centre National de la Recherche Scientifique**
  **75016 Paris (FR)**
• **Université de Montpellier**
  **34090 Montpellier (FR)**

(72) Inventeurs:
• **JORDY, Christian**
  **33440 St Louis De Montferrard (FR)**
• **FISCHER, Florent**
  **33520 Bruges (FR)**

• **CUEVAS, Fermin**
  **91510 Lardy (FR)**
• **LADAM, Alix**
  **34090 Montpellier (FR)**
• **ALDON, Laurent**
  **34090 Montpellier (FR)**
• **LIPPENS, Pierre-Emmanuel**
  **34130 Saint Aunes (FR)**
• **BIBENT, Nicolas**
  **34000 Montpellier (FR)**
• **OLIVIER-FOURCADE, Josette**
  **34830 Jacou (FR)**
• **JUMAS, Jean-Claude**
  **34830 Jacou (FR)**

(74) Mandataire: **Lavoix**
  **2, place d'Estienne d'Orves**
  **75441 Paris Cedex 09 (FR)**

(56) Documents cités:
EP-A1- 2 605 315        WO-A1-2014/034494
WO-A1-2015/044550       WO-A2-2006/021714
US-A1- 2015 008 374

**Description**

La présente invention concerne le domaine du stockage d'énergie et plus particulièrement celui des électrodes négatives intermétalliques composites.

Les nouveaux dispositifs de stockage doivent contribuer à une gestion optimisée de l'énergie permettant l'intégration des énergies renouvelables dans le mix énergétique. En ce qui concerne les accumulateurs Li-ion, les futurs systèmes doivent présenter des densités d'énergie plus importantes tout en étant plus sûrs avec des durées de vie en cyclage et calendaire de plus en plus longues en fonction des applications (stationnaires, spatiales, transports).

Pour ce qui concerne les électrodes négatives, les matériaux intermétalliques à base d'étain (Sn) ou de silicium (Si) sont généralement envisagés. Le document WO2006021714 divulgue un matériau d'électrode négative utilisable dans des accumulateurs lithium-ion rechargeables.

Ils affichent des densités d'énergie élevées (600 à 4000 Ah/kg) mais présentent des problèmes de vieillissement importants liés à plusieurs phénomènes :

- une dégradation mécanique en présence de lithium, liée aux variations volumiques au cours du cyclage, augmentation du volume lors de la formation des alliages $Li_xSn$ ou $Li_xSi$ et contraction au cours de la délithiation, entraînant une fracturation de l'électrode et une courte durée de vie due à la perte de contacts (perte de percolation électronique) ;
- une dégradation chimique qui se produit à l'interface électrode-électrolyte, qui peut être une simple décomposition ou une décomposition avec réduction des sels ou des solvants de l'électrolyte. On observe alors la formation d'une couche à l'interface (SEI) intéressante si elle est fine et stable.

Il est donc indispensable à la fois de contrôler l'expansion volumique lors de la formation des alliages $Li_xSn$ ou $Li_xSi$ et d'absorber cette expansion, ainsi que de protéger l'électrode des attaques chimiques.

Afin de minimiser les phénomènes de dégradation précités, plusieurs approches ont été développées (nanostructurations, dispersions, couches de passivation).

Les alliages composites du système Ni-Ti-Sn ont un large domaine de cyclabilité (notamment à partir de 40% atomique de Sn) et une bonne adhérence à la couche de passivation phosphate généralement appliquée en métallurgie. Cependant leur masse atomique élevée peut être un handicap pour atteindre des capacités massiques intéressantes.

Les alliages composites du système Ni-Ti-Si ne sont actifs qu'à partir de 60% atomique en Si. L'existence de particules actives et inactives à base de Si est intéressante pour diminuer la dégradation mécanique et la faible masse atomique compense largement la perte d'espèces actives. Cependant le matériau a généralement une faible adhérence à la couche de passivation, et la dégradation chimique, bien que retardée, est inévitable après un certain nombre de cycles.

Les solutions proposées ne sont toujours pas pleinement satisfaisantes.

Les inventeurs ont ainsi identifié que les composites mixtes Ni-Ti-Si/Sn à forte teneur en Si permettent donc une meilleure capacité et une bonne absorption des variations volumiques, et associés à des alliages Sn plus déformables, permettent l'accrochage de la couche de passivation phosphate. Ils représentent donc une solution aux problématiques rencontrées.

La présente invention propose donc de nouveaux matériaux d'électrode obtenus par dispersion des espèces actives (Sn, Si, Sn/Si) dans une matrice composite Ti-Ni-(Sn/Si), de types vitrocéramiques ou céramiques polycristallines multiéchelles, présentant un grand nombre d'avantages (domaines de compositions complexes distribués avec un ordre à moyenne distance, possibilité d'associer des propriétés différentes, facilité de synthèse). En particulier, ces matériaux associent plusieurs propriétés : une forte densité d'énergie avec expansion volumique minimisée (intermétalliques de Hume-Rothery), une absorption de l'expansion volumique résiduelle par dispersion des espèces actives dans des systèmes d'espèces inactives déformables, dits à « mémoire de forme », ainsi qu'une passivation stable grâce à des soudures souples de type $Ni_2SnP$.

Les matériaux composites selon l'invention permettent donc de : 1) minimiser l'expansion volumique grâce à un modèle prédictif ; 2) absorber les variations volumiques restantes par dispersion des espèces actives dans des systèmes composites polycristallins multiéchelles ou vitrocéramiques dans lesquels certains composants sont à « mémoire de forme » et 3) éventuellement fixer ces domaines et les protéger grâce à des couches de protection accrochées par soudures souples au moyen d'une couche de passivation de synthèse ultérieurement formée par interaction entre le composite et le système passivant.

Tel que utilisé ici, on entend par « composite » au sens de la présente invention un assemblage d'au moins deux composants non miscibles (mais ayant une forte capacité de pénétration) dont les propriétés se complètent. Le nouveau matériau ainsi constitué, hétérogène, possède des propriétés que les composants seuls ne possèdent pas. Plus particulièrement, ledit matériau peut être formé d'au moins deux composés définis ou éléments, de nature et/ou de dimensions différentes, qui se comportent comme un seul composé grâce à un assemblage imposant un ordre à moyenne distance. Cet arrangement permet alors d'additionner les propriétés des composants sans les modifier. Le composite peut être vitreux, vitrocéramique ou polycristallin multiéchelles.

Selon un premier objet, la présente invention concerne un matériau composite enrichi en Si électrochimiquement actif de formule (I-M) :

$$(1-z)M +zSi \qquad (I\text{-}M)$$

Où M est une matrice composite de dispersion comprenant Ti et Ni, et au moins un élément choisi parmi Si et/ou Sn ; z représente le ratio molaire de silicium dans ledit matériau tel que $0<z\leq0,70$.

Selon un mode de réalisation, ladite matrice composite de dispersion M est choisie parmi les matrices suivantes :

a. Les matrices composites de dispersion à base de Ni, Ti et Sn de formule M1 :

$$Ni_xTi_ySn_{1-(x+y)} \qquad (M1)$$

Où

$0.20\leq x\leq0.30$ ;
$0.20\leq y\leq0.30$ ;

b. Les matrices composites de dispersion à base de Ni, Ti, Si de formule M2 :

$$Ni_{x'}Ti_{y'}Si_{1-(x'+y')} \qquad (M2)$$

Où

$0.20\leq x'\leq0.30$ ;
$0.20\leq y'\leq0.30$ ;

Et

c. Les matrices composites de dispersion mixtes M3 constituées des matrices M1 et M2 définies en a. et b. ci-dessus, selon la formule :

$$M3=aM1+(1-a)M2$$

Où $0<a<1$,
Où x, x' et y, y' représentent respectivement les ratios molaires respectifs des espèces Ni et Ti dans les matrices M1 et M2, et a représente le ratio molaire de la matrice M1 dans la matrice M3.

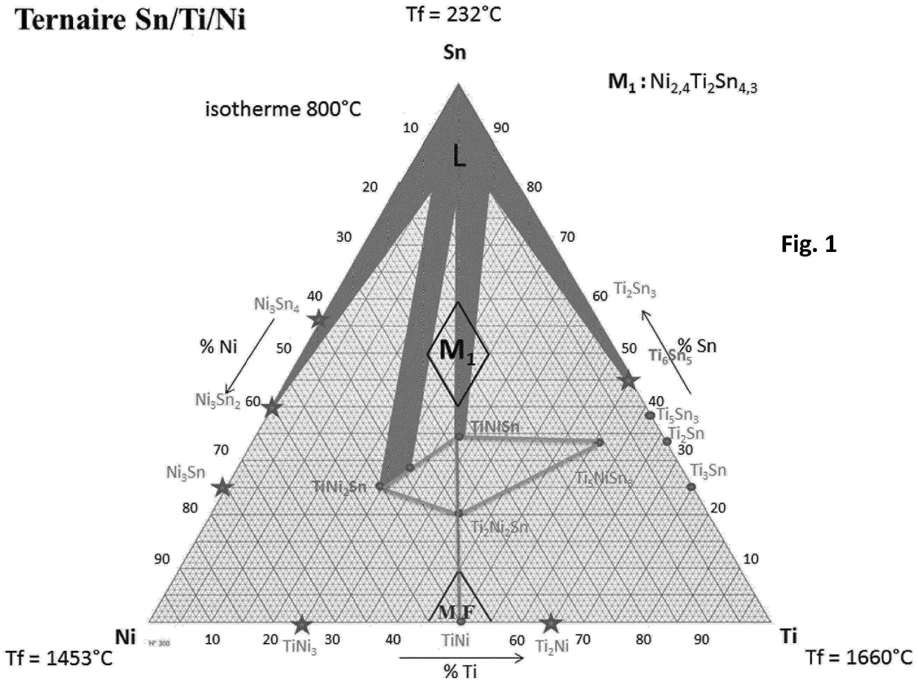

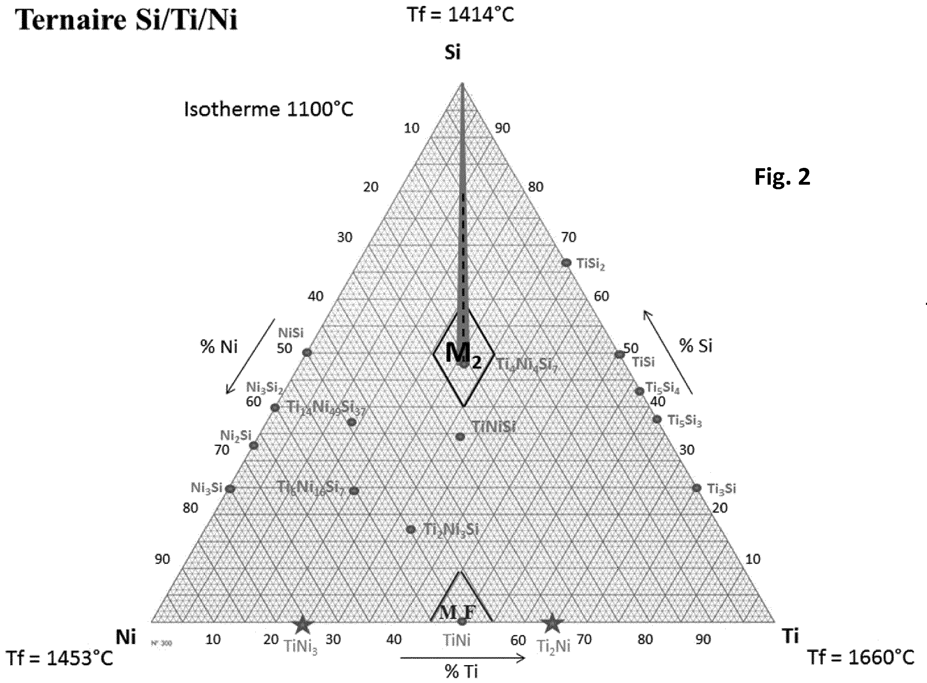

Les matrices composites selon l'invention sont constituées de phases intermétalliques bien distribuées avec des compositions en espèces Sn et/ou Si généralement comprises entre 40 et 60 % atomiques. Les matrices M1 et M2 sont respectivement situées dans les domaines de liquidus identifiés sur les ternaires Ti-Ni-Sn et Ti-Ni-Si (Figures 1 et 2). Pour minimiser l'expansion volumique, les composants actifs ayant des concentrations électroniques situées dans le même domaine que celles des alliages $Li_xSn$ ou $Li_xSi$, permettent leurs formations par réaction de déplacement avec de très faibles modifications structurales. Pour absorber l'expansion volumique, les composants inactifs $NiTiMe_u$ (Me=Si, Sn; $u\leq1$) sont des alliages stables à mémoire de forme capables de subir les contraintes mécaniques par déformation sans modification de volume. Ces matrices composites présentent de grandes similitudes tout en étant complémentaires. Les matrices de type M1 à base de Sn sont actives électrochimiquement alors que les matrices de type M2 à base de Si, inactives électrochimiquement, assurent une certaine stabilité en cyclage des espèces dispersées. La matrice M3 associe ces deux propriétés dans un composite mixte. Les trois matrices M1, M2 et M3 sont enrichies en silicium afin d'optimiser la capacité et sont alors définies comme matériaux composites enrichis.

Dans le cas où la matrice composite de dispersion est la matrice M1, le matériau composite enrichi selon l'invention répond alors à la formule (I-M1) :

$$(1-z)M1 +zSi \qquad (I\text{-}M1)$$

Où z est tel que défini ci-dessus, et correspond alors à la formule (I-M1) :

$$Ni_{x(1-z)}Ti_{y(1-z)}Sn_{(j-z)(1-x-y)}Si_z \qquad (I\text{-}M1)$$

Où

$0.20 \leq x \leq 0.30$ ;
$0.20 \leq y \leq 0.30$ ;
$o < z \leq 0.70$,
Où x, y et z sont tels que définis ci-dessus.

Dans le cas où la matrice composite de dispersion est la matrice M2, le matériau composite enrichi selon l'invention, répond à la formule (I-M2) :

$$(1-z')M2+z'Si \qquad (I\text{-}M2)$$

Où z' est égal à z, tel que défini ci-dessus,
et correspond alors à la formule (I-M2) :

$$Ni_{x'(1-z')}Ti_{y'(1-z')}Si_{1-(x'+y')(1-z')} \qquad (I\text{-}M2)$$

Où

$0.20 \leq x' \leq 0.30$ ;
$0.20 \leq y' \leq 0.30$ ;
$0 < z' \leq 0.70$ ;
Où x', y' et z' sont tels que définis ci-dessus.

Dans le cas où la matrice composite de dispersion est la matrice M3, le matériau composite enrichi selon l'invention, répond à la formule (I-M3) :

$$(1-z'')M3 + z''Si \qquad (I\text{-}M3)$$

Où z" est égal à z, tel que défini ci-dessus,
et correspond alors à la formule (I-M3) :

$$Ni_{[x+a(x-x')](1-z'')}Ti_{[y+a(y-y')](1-z'')}Sn_{a(1-x-y)(1-z'')}Si_{(1-a)(1-x'-y')(1-z'')+z''} \qquad (I\text{-}M3)$$

Où

$0.20 \leq x \leq 0.30$ ;
$0.20 \leq x' \leq 0.30$ ;
$0 < a < 1$
$0.20 \leq y \leq 0.30$ ;
$0.20 \leq y' \leq 0.30$ ;
$O < z'' \leq 0.70$
Où x, x', y, y', a et z" sont tels que définis ci-dessus.

Pour minimiser l'expansion volumique un modèle de prédiction a été établi sur les bases des études de HUME-ROTHERY, montrant que des systèmes métalliques de concentrations électroniques [e] équivalentes peuvent adopter plusieurs compositions sans déformation du réseau. Pour les matériaux à base d'étain ces concentrations électroniques [e], ne mettant en jeu que les électrons de valence localisés, sont directement reliées aux déplacements isomériques Mössbauer.

Ce modèle expérimental prédictif permet de minimiser l'expansion volumique en synthétisant des alliages se plaçant dans le domaine présentant des concentrations électroniques [e] correspondant aux alliages riches en lithium $Li_xSn$ ($x \sim 3$ à 4,2).
Pour absorber les variations volumiques encore existantes, les alliages actifs électrochimiquement ont été associés à des alliages à « mémoires de forme », de formule globale NiTiMe$_u$ (Me=Si, Sn; u≤1). Ces alliages ont une concentration électronique suffisamment faible (<1,5) pour ne pas être impliqués dans le processus électrochimique. Ces divers composants, actifs et inactifs sont associés, leur assemblage constituant ainsi le matériau composite intermétallique à propriétés spécifiques (minimisation et absorption de l'expansion volumique).

Le matériau composite enrichi selon l'invention peut être protégé des dégradations chimiques pour prévenir le contact direct de l'environnement tel que l'électrolyte, avec la surface du matériau.

Ainsi, la protection de l'électrode composite vis-à-vis de l'environnement électrolytique pendant les cycles galvanostatiques de charge/décharge est assurée grâce à un enrobage de phosphates alcalins, les propriétés réductrices du nickel permettant d'assurer un bon accrochage entre la couche de protection et le composite tout en assurant un meilleur contact avec le collecteur de courant grâce à la formation de phosphures de Ni, Sn de type Ni$_2$SnP/Ni$_{10}$Sn$_5$P$_3$ utilisés comme soudure souple dans les semiconducteurs.

Selon un autre objet, l'invention concerne donc également ledit matériau composite enrichi (I-M) passivé, comprenant :

- le matériau composite enrichi de formule (I-M) tel que défini ci-avant et
- une couche superficielle de passivation.

On appelle « couche superficielle de passivation » une couche mince, stable, isolante électronique et conductrice ionique pouvant être appliquée sur un matériau afin de prévenir le contact direct dudit matériau avec son environnement. Typiquement, ladite couche de passivation peut être assimilée à une couche dite d'interface solide/électrolyte (SEI).

La couche de passivation peut être choisie parmi les couches habituellement utilisées pour protéger les intermétalliques .Le matériau composite enrichi éventuellement passivé selon l'invention, convient particulièrement comme matériau d'électrode.

Selon un autre objet, la présente invention vise donc également une électrode comprenant :

a) un matériau composite enrichi (I-M) comprenant les composites I-M1, I-M2, et/ou I-M3, selon l'invention ; et/ou
b) un matériau composite enrichi (I-M) passivé selon l'invention, tel que défini ci-avant.

Des matrices M originales ont été développées pour préparer les matériaux composites de l'invention.

Selon un autre objet, la présente invention concerne donc une matrice composite de dispersion de formule (M1)

$$Ni_x Ti_y Sn_{1-(x+y)} \qquad (M1)$$

Où

0.20≤x≤0.30 ;
0.20≤y≤0.30 ;
Où x et y sont tels que définis ci-avant.

Selon un mode de réalisation la matrice composite de dispersion de formule (M1) ci-dessus comprend avantageusement les éléments Ti, Ni, Sn dans les proportions suivantes (en pourcentages atomiques) :

20%≤Ni≤30% ;
20%≤Ti≤30% ;
40%≤Sn≤60%.

Selon un mode de réalisation, la matrice composite de dispersion de formule (M1) ci-dessus répond typiquement à la formule :

$$Ni_{(3+n)t} Ti_{6(1-t)} Sn_{(5-t)}$$

Où n est compris entre 0,3 et 0,7 et t est compris entre 0,50 et 0,75

Selon un autre objet, la présente invention vise également la matrice composite de dispersion de formule (M3)

$$Ni_{x'+a(x-x')} Ti_{y'+a(y-y')} Sn_{a(1-x-y)} Si_{(1-a)(1-x'-y')} \qquad (M3)$$

Où

$0.20 \leq x \leq 0.30$ ;
$0.20 \leq x' \leq 0.30$ ;
$0 < a < 1$ ;
$0.20 \leq y \leq 0.30$ ;
$0.20 \leq y' \leq 0.30$ ;

Où x, x', y, y' et a sont tels que définis ci-avant.

La présente invention vise également le procédé de préparation du matériau composite enrichi de formule (I-M).

Typiquement, la méthode de synthèse des matrices est le broyage réactif, dans des conditions ajustées aux systèmes et aux domaines de composition. Les conditions de broyage dépendent généralement de paramètres tels que vitesse de rotation, rapport masse de poudre/masse de billes. Généralement, ces paramètres sont respectivement 500 tours/minute pour la vitesse de rotation, un rapport d'environ 1/28 pour des billes de diamètre 15mm, étant entendu que le temps de broyage compris entre 200 et 700 notamment, peut être adapté en fonction du domaine de composition. Généralement, les composites enrichis en silicium peuvent être synthétisés par broyage dans le domaine de liquidus. On entend ici par « broyage réactif » le broyage d'au moins deux composants interagissant entre eux lors du broyage, et aboutissant à un matériau composite final synthétisé généralement stable thermodynamiquement.

Deux voies peuvent ainsi être utilisées : i) par dispersion du silicium dans les matrices M préformées avec des compositions correspondant aux systèmes binaires $(1-z)$ M1 - z Si et $(1-z')$ M2 - z' Si , $(1-z'')$M3 - z''Si ou ii) par intégration du silicium à partir des composants, binaires pour l'étain ($Ni_{3+n}Sn_4$ où n est compris entre 0,3 et 0,7 , $Ti_6Sn_5$, Si) et à partir des éléments (Ni, Ti, Si) pour le silicium aux mêmes compositions que celles de la voie i. L'étape de broyage peut généralement être réalisée pour toute méthode mécanique habituellement utilisée, par application de procédures généralement connues de l'homme du métier.

Typiquement, selon un premier mode de réalisation, ledit procédé comprend l'étape de broyage de Si avec ladite matrice composite de dispersion M, au moyen de z part de Si et de $(1-z)$ part de la dite matrice composite de dispersion M, où z est tel que défini ci-avant. Selon un autre mode de réalisation, ledit procédé comprend le broyage de Si avec les autres éléments constituant la matrice composite ou avec les alliages contenant lesdits éléments.

Selon un mode de réalisation, lorsque le dit matériau composite enrichi (I-M2) ne contient pas de Sn, alors le procédé comprend le broyage des éléments Si, Ti, Ni en proportions stœchiométriques.

Selon un autre mode de réalisation, lorsque le matériau composite enrichi (I-M) contient du Sn, ledit procédé comprend le broyage de Si avec les alliages $Ni_{3+n}Sn_4$ et $Ti_6Sn_5$ où n est compris entre 0,3 et 0,7.

Selon un autre objet, la présente invention concerne le procédé de préparation du matériau composite enrichi (I-M) passivé ci-dessus. Ledit procédé comprend généralement la mise en contact du matériau composite enrichi (I-M) avec une solution aqueuse de phosphate de métal alcalin éventuellement hydraté. La mise en contact peut être réalisée par mise en suspension ou immersion du matériau dans ladite solution aqueuse ou par application et /ou étalement de ladite solution sur ledit matériau. Typiquement, ledit mélange est réalisé en milieu acide, à température comprise entre 20 et 80°C.

Selon l'invention, des procédés originaux ont été mis au point pour préparer les matrices M1, M2 et M3.

Il s'agit de synthétiser des matrices intermétalliques composites stables M1, M2 et/ou M3 permettant la dispersion de l'espèce active Si.

La présente invention vise donc également le procédé de préparation de la matrice composite de dispersion de formule (M1) comprenant le broyage des alliages $Ni_{3+n}Sn_4$ et $Ti_6Sn_5$ où n est compris entre 0,3 et 0,7.

Généralement, ledit procédé comprend l'étape de broyage des alliages $Ni_{3+n}Sn_4$ et $Ti_6Sn_5$ dans le rapport molaire $(Ni_{3+n}Sn_4)/(Ti_6Sn_5)=t/(1-t)$ où n est compris entre 0,3 et 0,7 et t est compris entre 0,50 et 0,75.

Selon un autre objet, la présente invention concerne également le procédé de préparation de la matrice composite de dispersion (M2) comprenant le broyage des éléments Ni, Ti et Si en proportions stœchiométriques.

Selon un autre objet, la présente invention vise également le procédé de préparation de la matrice composite de dispersion (M3) par broyage des alliages $Ni_{3+n}Sn_4$ où n est compris entre 0,3 et 0,7 et $Ti_6Sn_5$ et des éléments Ti, Ni et Si.

Figures

La Figure 1 représente le système ternaire Ti-Ni-Sn (section isotherme 800°C) avec le domaine des matériaux composites M1 synthétisés à partir du pseudo binaire t $Ni_{3+n}Sn_4$ - $(1-t)$ $Ti_6Sn_5$ avec $0,3 \leq n \leq 0,7$ et $0,50 \leq t \leq 0,75$ correspondant aux compositions ternaires $Ti_xNi_ySn_{1-(x+y)}$ avec $0,20 \leq x \leq 0,30$ et $0,20 \leq y \leq 0,30$ ainsi que les composés définis et les alliages à mémoire de forme MF identifiés dans la littérature.

La Figure 2 représente le système ternaire Ti-Ni-Si (section isotherme 1100°C).avec le domaine des matériaux composites M2 synthétisés à partir de compositions ternaires $Ti_{x'}Ni_{y'}Si_{1-(x'+y')}$. avec $0,20 \leq x' \leq 0,30$ et $0,20 \leq y' \leq 0,30$

ainsi que les composés définis et les alliages à mémoire MF identifiés dans la littérature

La Figure 3 représente les caractéristiques électrochimiques du composite I-M2 (voie ii) enrichi en silicium éventuellement passivé.

La Figure 4 représente les caractéristiques électrochimiques du composite I-M3 (voie ii) enrichi en silicium éventuellement passivé.

La Figure 5 représente les caractéristiques électrochimiques du composite I-M1 (voie ii) enrichi en silicium, passivé et passivé traité thermiquement.

La présente invention est illustrée ci-après par des exemples illustratifs et non limitatifs de réalisation.

**Exemple** 1 : **Synthèse des matrices**

a) Matrices M1

Afin d'éviter la fusion prématurée de Sn (232°C) lors du broyage les matrices à base d'étain sont synthétisées à partir du pseudo binaire t $Ni_{3+n}Sn_4$ - (1-t) $Ti_6Sn_5$ de formule globale $Ni_{3,6t}Ti_{6(1-t)}Sn_{5-1}$ pour différentes valeurs de n comprises entre 0,3 et 0,7 et t comprises entre 0,50 et 0,75 (Figure 1).

Ces différentes matrices sont synthétisées par broyage réactif dans les mêmes conditions (nature des jarres, taux de remplissage, nombre de billes) avec trois temps de broyage (1h, 3h, 10h) afin de suivre l'évolution des réactions. On constate que le broyage 1h correspond à une phase de redistribution des matériaux de départ avec probablement une création d'interfaces observables par l'élargissement de certaines raies en diffraction X. Les temps de broyage 3h et 10h montrent peu de différences structurales et constituent des phases réactives conduisant à un composite distribué différemment selon la composition.

La matrice M1 de composition globale $Ni_{0,277}Ti_{0,227}Sn_{0,496}$ correspondant à n=0,60 t=0,67 obtenue après 3 h de broyage effectif est la plus intéressante. La diffraction X caractéristique d'un matériau très divisé permet d'identifier un composant TiNiSn inactif et des domaines plus amorphisés, composants actifs de types $Ni_3Sn_4$ et $Ti_6Sn_5$ modifiés. La Spectrométrie Mössbauer confirme la présence de 23% de TiNiSn inactif électrochimiquement et de 77% de composants actifs.

Cette matrice M1 a été testée électrochimiquement en pile bouton à partir d'électrodes réalisées sous forme d'encre constituée du matériau actif (70%) + carbone Y50A (18%) + CMC (12%) enduite sur collecteur de cuivre [Conditions de cyclage : C/10 ; fenêtre de potentiel 1,5 V - 0,01 V, Electrolyte sans additif]. Elle est active électrochimiquement avec une capacité réversible de 393 Ah/kg. Cette capacité réversible est en accord avec la présence dans ce composite de 23% d'espèce inactive de type TiNiSn.

b) Matrice M2

Le point de fusion du silicium étant élevé (1410°C) les synthèses sont réalisées par broyage des éléments. La composition 26,7% at ; en Ti, 26,7 % at. en Ni et 46,6 % at. en Si de formule globale $Ni_{0,267}Ti_{0,267}Si_{0,466}$ (Figure 2) a été synthétisée par broyage des éléments en quantités stœchiométriques avec un temps de broyage effectif de 12 h.

Le diagramme de diffraction X montre la présence de la phase $Ti_4Ni_4Si_7$. L'élargissement des raies de diffraction traduit la faible taille des particules.

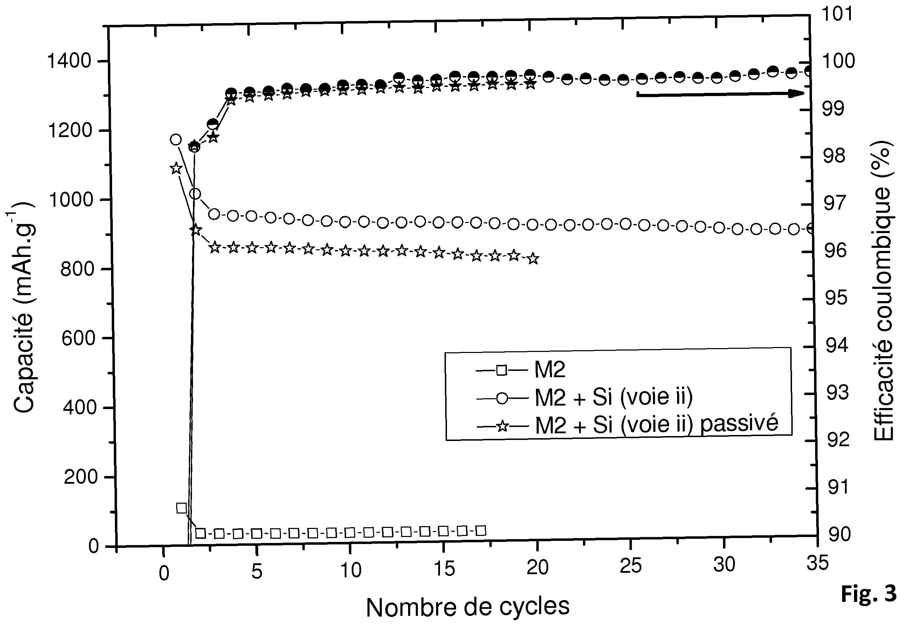

Cette matrice est inactive électrochimiquement (Figure 3). Par comparaison avec la composition analogue du système Ti-Ni-Sn, l'inactivité de cette matrice rend compte de la différence de nature entre Sn et Si. Le silicium engage ses électrons de valence dans des liaisons plus covalentes en coordination tétraédrique et les réactions de déplacement ne sont pas possible tant que la composition correspond à des enchaînements continus Si-Si-Si.

c) Matrice M3

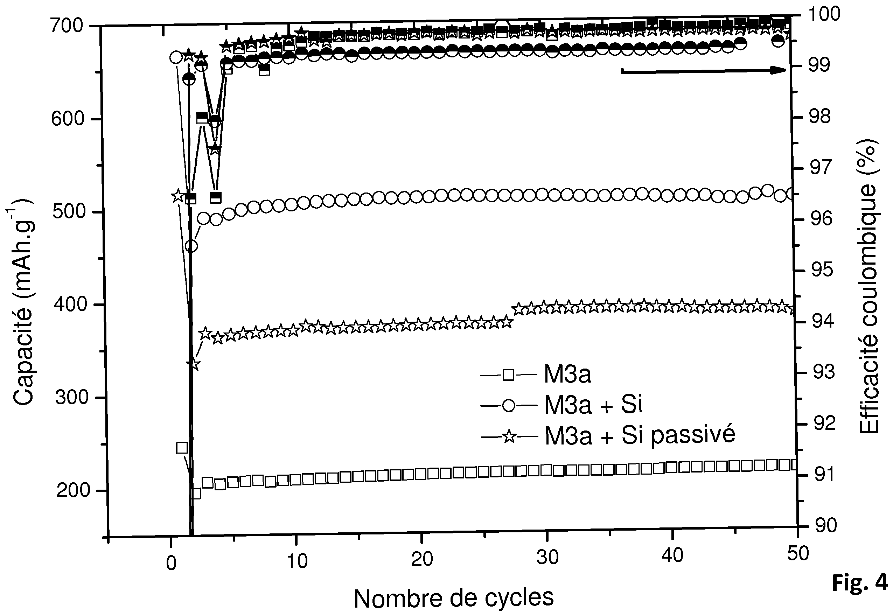

La matrice M3= a M1 + (1-a) M2 avec a=0,25 de formule globale $Ni_{0,27}Ti_{0,26}Sn_{0,12}Si_{0,35}$ a été synthétisée par broyage 20h du mélange [0,25 M1 + 0,75 M2] M1 et M2 obtenues suivant les méthodes décrites ci-dessus en 1a et 1b. La diffraction des rayons X met en évidence la présence de β Sn cristallisé et d'espèces amorphisées du système ternaire Ti-Ni-Sn. La spectrométrie Mössbauer confirme la présence de β Sn, et montre celles d'un composant ternaire inactif électrochimiquement et déformable et d'un composant actif. En électrochimie (Figure 4) on observe une bonne tenue en cyclage sans décalage des courbes et une capacité ~210 Ah/kg. Cette capacité plus faible que celle de M1 rend compte du faible nombre d'espèces actives. Le silicium a donc été introduit dans la matrice au détriment de l'étain. La perte au 1er cycle est importante (40%) car une partie du lithium s'insère dans la composante silicium de la matrice de façon irréversible. Par contre la polarisation est faible et l'efficacité coulombique élevée (99,7%).

**Exemple 2 : Synthèse des matériaux composites enrichis**

a) Composites I-M1 (M1 enrichi en Si) (voie i)

La voie i consiste à se placer sur le système binaire (1-z) M1 - z Si. La composition $Ni_{0,276}Ti_{0,227}Sn_{0,497}$ située dans la zone de liquidus (Figure 1) a été choisie comme matrice M1 de dispersion du silicium en se plaçant sur le pseudo binaire (1-z) $Ni_{0,277}Ti_{0,227}Sn_{0,496}$ + z Si avec z=0,13. Le composite I-M1 correspond à la formule globale $Ni_{0,241}Ti_{0,198}Sn_{0,432}Si_{0,13}$.(56% at. Sn+Si).

La synthèse a été effectuée par broyage du mélange 0,87 M1 + 0,13 Si pendant 3h. Le matériau obtenu a été caractérisé par diffraction X, spectrométrie Mössbauer et électrochimie.

Après broyage les raies de diffraction X du silicium sont élargies et de faible intensité. Le spectre Mössbauer présente trois sous-spectres, deux doublets majoritaires correspondant aux composants actifs ($\delta$=2,09 mm/s, $\Delta$=1,72 mm/s et $\delta$=2,04 mm/s, $\Delta$=0,76 mm/s) et un singulet ($\delta$=1,52 mm/s) attribuable à une phase ternaire stable de type TiNiSn inactive en électrochimie. Les paramètres hyperfins des doublets sensiblement différents de ceux observés pour $Ni_{0,276}Ti_{0,227}Sn_{0,497}$ permettent de penser qu'une partie du silicium a été intégrée dans la matrice de dispersion M1.

Les tests électrochimiques montrent une capacité réversible ~ 425 Ah/kg et une bonne tenue en cyclage sur les 30 cycles effectués. Cette capacité réversible inférieure à la capacité théorique (670 Ah/kg) confirme que le silicium intégré dans la matrice M1 est inactif électrochimiquement.

b) Composites I-M1 (M1 enrichi en Si) (voie ii)

Pour vérifier la possibilité d'intégration du silicium dans la matrice M1 le composite enrichi

I-M1 de même formule globale que celui décrit ci-dessus en 2a a été synthétisée à partir des phases binaires de l'étain ($Ni_{3,6}Sn_4$ et $Ti_6Sn_5$) et du silicium élément selon la voie ii. Ainsi le mélange 0,067 $Ni_{3,6}Sn_4$ + 0,033 $Ti_6Sn_5$ + 0,13 Si a été broyé 3h.

En diffraction X le diagramme avant broyage est caractéristique des trois composants ($Ni_{3,6}Sn_4$, $Ti_6Sn_5$, Si). Après broyage l'amorphisation du matériau est importante, les raies de diffraction du silicium ont disparu et le diffractogramme est caractéristique d'un composite différent de celui obtenu par la voie i. De même le spectre Mössbauer est formé par un seul doublet avec des paramètres hyperfins ($\delta$=2,04 mm/s et $\Delta$=1,13 mms) différents de ceux du composite obtenu par la voie i.Ces deux techniques montrent que le silicium a été intégré de façon homogène dans la matrice..

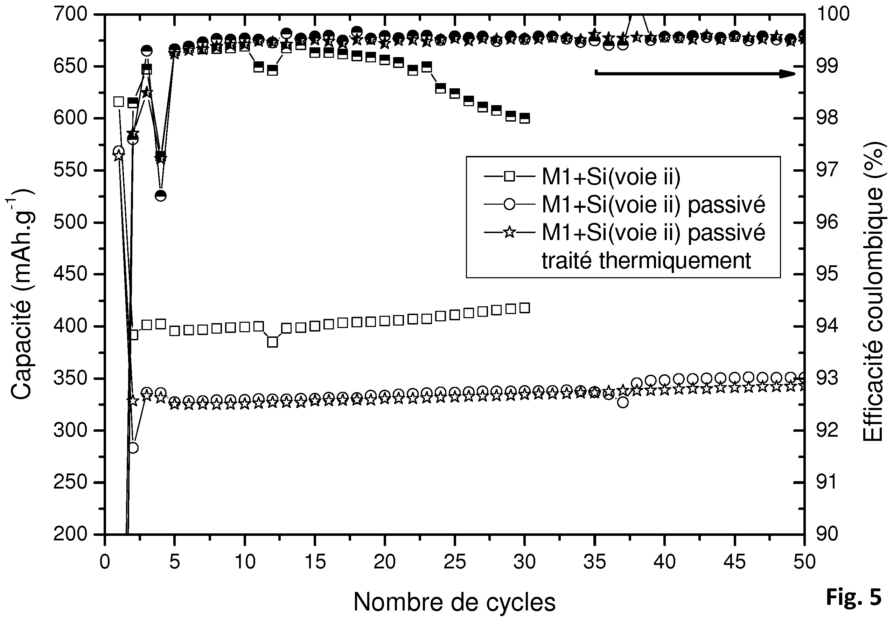

En électrochimie (Figure 5) on observe une capacité réversible ~ 400 Ah/kg et une bonne stabilité en cyclage sur les 30 premiers cycles. La capacité réversible est proche de celle observée pour le composite obtenu par la voie i et très inférieure à la capacité théorique ce qui confirme l'intégration totale du silicium dans la matrice et son inactivité électrochimique.

c) Composites I-M2 (M2 enrichi en Si) (voie i)

Les composites I-M2 enrichis en silicium sont obtenus en se plaçant sur le système (1-z') M2 + z' Si. La composition de M2 choisie pour l'enrichissement, située dans la zone de liquidus (Figure 2), correspond à la formule globale $Ni_{0,267}Ti_{0,267}Si_{0,466}$. Avec z' =0,55 le composite obtenu correspondant à la formule globale $Ni_{0,12}Ti_{0,12}Si_{0,76}$. La synthèse a été effectuée par broyage de la matrice M2 préformée et du silicium élément (voie i) pour une durée de broyage effectif de 12h. Le composite obtenu a été caractérisé par diffraction X et électrochimie. En diffraction X on identifie la présence majoritaire de silicium et des composés de type $Ti_5Si_3$ ou $NiTi_4Si_4$ et $Ni_2Si_2$. En électrochimie on observe une capacité réversible ~ 870 Ah/kg nettement inférieure à la capacité théorique de 2097 Ah/kg calculée en tenant compte de la totalité du silicium présent dans le composite. Ceci confirme donc que la matrice M2 a été modifiée au cours de la synthèse et que seulement une partie du silicium ajouté est actif électrochimiquement. Ainsi une partie du silicium rajouté a été intégré dans le domaine de composition de la matrice inactive $Ni_{x'}Ti_{y'}Si_{(1-x'-y')}$ avec $0,4<1-x'-y'<0,6$.

d) Composites I-M2 (M2 enrichi en Si) (voie ii)

La même composition $Ni_{0,12}Ti_{0,12}Si_{0,76}$ a été synthétisée par broyage des éléments (voie ii) avec une durée de broyage effective de 12h.

Le composite obtenu a été caractérisé par diffraction X et électrochimie. En diffraction X on identifie la présence majoritaire de silicium et des composés de type $Ti_5Si_3$ ou $NiTi_4Si_4$ et $Ni_2Si_2$ comme pour la voie i. En électrochimie (Figure 3) on observe une capacité réversible ~ 920 Ah/kg nettement inférieure à la capacité théorique de 2097 Ah/kg calculée en tenant compte de la totalité du silicium présent dans le composite. On note cependant une meilleure tenue en cyclage et l'absence de décalage à bas potentiel observé pour le composite obtenu par la voie i.

e) Composite I-M3 (M3 enrichi en Si)

Le composite I-M3 a été synthétisé par broyage 20h de la matrice M3 de composition globale $Ni_{0,27}Ti_{0,26}Sn_{0,12}Si_{0,35}$ obtenue par la méthode décrite dans l'exemple 1.c et du silicium élément avec les proportions 0,57 $Ni_{0,27}Ti_{0,26}Sn_{0,12}Si_{0,35}$ + 0.43 Si conduisant à la formule globale $Ni_{0,15}Ti_{0,15}Sn_{0,07}Si_{0,63}$.

Pour le composite I-M3 enrichi en silicium la diffraction X met en évidence la présence de $\beta$ Sn, de Si et d'espèces amorphisées du système Ti-Ni-Sn-Si. En spectrométrie Mössbauer la présence de $\beta$ Sn est confirmée, avec la présence d'une espèce active électrochimiquement. L'enrichissement en silicium améliore nettement la capacité réversible (511 Ah/kg, Figure 4) par rapport à M3 avec cependant une efficacité coulombique affaiblie

## Exemple 3 : Protection de l'électrode composite

La protection de l'électrode composite vis-à-vis de l'environnement électrolytique pendant les cycles galvanostatiques de charge/décharge est assurée grâce à un enrobage de phosphates alcalins, les propriétés réductrices du nickel permettant d'assurer un bon accrochage entre la couche de protection et le composite tout en assurant un meilleur contact avec le collecteur de courant grâce à la formation de phosphures ternaires de type $Ni_2SnP$ utilisé comme soudure souple dans les semiconducteurs.

$Ni_2SnP$ connu pour ses propriétés déformables est formé in situ par réaction entre la couche de passivation phosphate et le composite grâce aux propriétés catalytiques du nickel libéré lors du broyage de $Ni_{3+n}Sn_4$ avec n compris entre 0,30 et 0,70..

Les composites sont passivés avec une solution de phosphate de sodium acidifié à pH=2. Cette solution est préparée à partir de phosphate de sodium monohydraté ($NaH_2PO_4$, $H_2O$) pour une concentration de 90 g/L (entre 40 et 140 g/l). Après dissolution du phosphate dans l'eau, la solution est ensuite acidifiée avec de l'acide orthophosphorique ($H_3PO_4$) jusqu'à l'obtention d'un pH égal à 2 (entre pH=1,5 et pH=2,5). Afin de passiver les composites, ceux-ci sont mélangés avec la solution de phosphate et placés dans un bain thermostaté à 40°C (entre 20 et 80°C) durant 4 heures, sous agitation magnétique ou sous barbotage (flux d'azote à travers un fritté). Après réaction, le composite passivé est récupéré par filtration sur Büchner, puis séché sous vide à 80°C durant 12 heures. Le produit ainsi obtenu est ensuite utilisé comme matériau d'électrode.

a) Protection du composite I-M1 (voie ii)

Le composite I-M1 (voie ii) a été préparé par broyage 3h du mélange 0,067 $Ni_{3,6}Sn_4$ + 0,033 $Ti_6Sn_5$ + 0,13 Si correspondant à la formule globale $Ni_{0,241}Ti_{0,197}Sn_{0,432}Si_{0,13}$. Sa passivation a été réalisée selon la méthode décrite précédemment et un des échantillons passivés a été traité thermiquement à 250°C sous argon. Ces trois matériaux ont été mis en électrode sous forme d'encres de composition matériau actif (70%) + carbone Y50A (18%) + CMC (12%) enduites sur collecteur de cuivre et testés en électrochimie [Conditions de cyclage : C/10 ; fenêtre de potentiel 1,5 V - 0,01 V, Electrolyte sans additif] (Tableau 1).

**Tableau 1** : Données électrochimiques des composites M1 (voie ii), I-M1, I-M1 passivé et I-M1 passivé traité thermiquement.

| Composite | Capacité au 1er cycle (Ah/kg) | Capacité en cyclage (Ah/kg) | Capacité Théorique (Ah/kg) | Polarisation (V) | Efficacité Coulombique (%) |
|---|---|---|---|---|---|
| M1 | 532 | 393 | 542 | 0,23 | 98,90 |
| I-M1 | 620 | 400 | 672 | 0,38 | 99,20 |
| I-M1 passivé | 598 | 330 | 672 | 0,47 | 99,50 |
| I-M1 passivé traité thermiquement | 564 | 327 | 672 | 0,25 | 99,50 |

Ces résultats sont illustrés à la Figure 5.

La protection du composite I-M1 ne modifie pas la nature du matériau. La couche de surface entraîne une légère augmentation de la perte au 1er cycle et une augmentation de la polarisation. La diminution de la capacité en cyclage résulte de l'implication de l'étain dans la couche de passivation, entraînant une légère amélioration de l'efficacité coulombique. L'effet du traitement thermique se manifeste par une diminution notable de la polarisation conséquence d'un meilleur accrochage avec une efficacité coulombique conservée.

b) Protection du composite I-M2 (voie ii)

Le composite I-M2 (voie ii) a été préparé par broyage 12h du mélange 12% de Ti, 12% de Ni et 76% de Si correspondant à la formule globale $Ni_{0,12}Ti_{0,12}Si_{0,76}$. Sa passivation a été réalisée selon la méthode décrite précédemment. Ces deux matériaux ont été mis en électrode sous forme d'encres de composition matériau actif (70%) + carbone Y50A (18%) + CMC (12%) enduites sur collecteur de cuivre et testés en électrochimie [Conditions de cyclage : C/10 ; fenêtre de potentiel 1,5 V - 0,01 V, Electrolyte sans additif] (Tableau 2).

**Tableau 2** : Données électrochimiques du composite M2 (voie ii) enrichi en silicium et passivé.

| Composite | Capacité au 1er cycle (Ah/kg) | Capacité en cyclage (Ah/kg) | Capacité Théorique (Ah/kg) | Polarisation (V) | Efficacité Coulombique (%) |
|---|---|---|---|---|---|
| M2 | 108 | 30 | - | - | - |
| I-M2 | 1168 | 921 | 2097 | 0,27 | 99,70 |
| I-M2 passivé | 1089 | 839 | 2097 | 0,28 | 99,50 |

Ces résultats sont illustrés à la Figure 3.

L'enrichissement en silicium de la matrice M2 (inactive électrochimiquement) conduit à des performances électrochimiques remarquables (Tableau 2). La protection du composite M2 enrichi en silicium n'améliore pas ces performances. Ces résultats montrent que le silicium n'est pas fortement impliqué dans la couche de protection qui s'avère être inopérante. Par comparaison avec les résultats obtenus pour le composite M1 l'étain joue donc un rôle sur l'efficacité de la passivation.

c) Protection du composite I-M3 [0,25 M1 (voie ii) + 0,75 M2 (voie ii) enrichi en Si]

Le composite I-M3 a été synthétisé par broyage 20h du mélange 0,57 M3 + 0,43 Si conduisant à la formule globale $Ni_{0,153}Ti_{0,146}Sn_{0,071}Si_{0,630}$.

**Tableau 3** : Données électrochimiques des composites M3, I-M3 et I-M3 passivé.

| Composite | Capacité au 1er cycle (Ah/kg) | Capacité en cyclage (Ah/kg) | Capacité Théorique (Ah/kg) | Polarisation (V) | Efficacité Coulombique (%) |
|---|---|---|---|---|---|
| M3 | 351 | 211 | 841 | 0,30 | 99,70 |
| I-M3 | 836 | 511 | 1560 | 0,30 | 98,10 |
| I-M3 passivé | 674 | 370 | 1560 | 0,44 | 99,70 |

Ces résultats sont illustrés à la Figure 4.

La passivation du composite M3a enrichi en silicium consomme une partie de l'étain comme le montre le diagramme de diffraction X. De ce fait la capacité en cyclage diminue (Tableau 3). L'étain est donc bien impliqué dans la couche de passivation et l'efficacité coulombique retrouve une valeur nettement améliorée (99,7 %).

**Conclusions**

Dans le composite M1 ($Ni_xTi_ySn_{1-(x+y)}$ avec $0,20 \leq x \leq 0,30$ et $0,20 \leq y \leq 0,30$) l'étain est actif en cyclage. L'enrichissement en silicium est possible mais il est plus ou moins intégré dans le domaine de composition de la matrice M1 et devient inactif. L'étain contenu dans la matrice M1 reste actif mais n'est pas suffisamment protégé des causes de vieillissement. L'enrichissement en silicium améliore la tenue mécanique de l'électrode composite grâce à l'inactivité du composant contenant le silicium. La passivation consomme environ 10% de l'étain et donc l'étain participe directement à l'accrochage de la couche de passivation du composite. Si la capacité réversible est légèrement diminuée l'efficacité coulombique est nettement améliorée. Pour ce type de composite la capacité reste insuffisante.

Dans le composite M2 ($Ni_{x'}Ti_{y'}Si_{1-(x'+y')}$ avec $0,20 \leq x' \leq 0,30$ et $0,20 \leq y' \leq 0,30$) on observe la formation d'un com-

posé défini $Ni_4Ti_4Si_7$ nanostructuré déjà identifié dans la littérature. Ce composite est pratiquement inerte électrochimiquement. L'enrichissement en Si correspond à une composition globale de 76 % atomique en silicium nettement au-dessus des 60% définis comme limite du composite M2 inactif. Les performances électrochimiques sont remarquables (870 Ah/kg en cyclage) avec une efficacité coulombique intéressante (99,7%). La passivation n'améliore pas les performances électrochimiques. L'étain joue donc un rôle sur l'efficacité de la passivation.

Dans le composite mixte M3a (0,25 M1 + 0,75 M2) la capacité est relativement faible due à la composition Sn+Si<60% avec pour conséquence l'inactivité du silicium. Cependant la polarisation est très faible et l'efficacité coulombique élevée (99,7%). L'enrichissement en silicium correspondant à des compositions Sn+Si ~ 70% améliore la capacité en cyclage. La passivation consomme une partie de l'étain ce qui améliore nettement l'efficacité coulombique.

## Revendications

1. Matériau composite enrichi en Si électrochimiquement actif de formule (I-M) :

$$(1-z)M + zSi \qquad (I\text{-}M)$$

Où M est une matrice composite de dispersion à base de Ti et Ni, et au moins un élément choisi parmi Si et/ou Sn ;
Et $0 < z \le 0{,}70$.

2. Matériau composite enrichi (I-M) selon la revendication 1 telle que la matrice composite de dispersion M est choisie parmi les matrices suivantes :

a. Les matrices composites de dispersion à base de Ni, Ti et Sn de formule M1 :

$$Ni_xTi_ySn_{1-(x+y)} \qquad (M1)$$

Où

$0.20 \le x \le 0.30$ ;
$0.20 \le y \le 0.30$ ;

b. Les matrices composites de dispersion à base de Ni, Ti et Si de formule M2 :

$$Ni_{x'}Ti_{y'}Si_{1(x'+y')} \qquad (M2)$$

Où

$0.20 \le x' \le 0.30$ ;
$0.20 \le y' \le 0.30$ ; et

c. Les matrices composites de dispersion mixtes M3 constituées des matrices M1 et M2 définies en a. et b. ci-dessus, selon la formule : M3=aM1+(1-a)M2
Où
$0 < a < 1$.

3. Matériau composite enrichi (I-M) selon la revendication 1 ou 2 telle que la matrice composite de dispersion est la matrice M1,
répondant à la formule (I-M1) :

$$(1-z)M1 + zSi \qquad (I\text{-}M1)$$

Où z est tel que défini en revendication 1.

4. Matériau composite enrichi selon la revendication 1, 2 ou 3 de formule (I-M1) :

$$Ni_{x(1-z)}Ti_{y(1-z)}Sn_{(j-z)(1-x-y)}Si_z \qquad (I\text{-}M1)$$

Où

$0.20 \leq x \leq 0.30$ ;
$0.20 \leq y \leq 0.30$ ;
$0 < z \leq 0.70$.

5. Matériau composite enrichi selon la revendication 1 ou 2 telle que la matrice composite de dispersion est la matrice M2,
Répondant à la formule (I-M2) :

$$(1-z')M2+z'Si \qquad (I\text{-}M2)$$

Où z' est égal à z, tel que défini en revendication 1.

6. Matériau composite enrichi selon la revendication 1, 2 ou 5 de formule (I-M2) :

$$Ni_{x'(1-z')}Ti_{y'(1-z')}Si_{1-(x'+y')(i-z')} \qquad (I\text{-}M2)$$

Où

$0.20 \leq x' \leq 0.30$ ;
$0.20 \leq y' \leq 0.30$ ;
$0 < z' \leq 0.70$.

7. Matériau composite enrichi selon la revendication 1 ou 2 telle que la matrice composite de dispersion est la matrice M3,
Répondant à la formule (I-M3) :

$$(1-z'')M3 +z''Si \qquad (I\text{-}M3)$$

Où z'' est égal à z, tel que défini en revendication 1.

8. Matériau composite enrichi selon la revendication 1, 2 ou 7 de formule (I-M3) :

$$Ni_{[x'+a(x-x')](1-z'')}Ti_{[y'+a(y-y')](1-z'')}Sn_{a(1-x-y)(1-z'')}Si_{(1-a)(1-x'-y')(1-z'')+z''} \qquad (I\text{-}M3)$$

Où

$0.20 \leq x \leq 0.30$ ;
$0.20 \leq x' \leq 0.30$ ;
$0 < a < 1$
$0.20 \leq y \leq 0.30$ ;
$0.20 \leq y' \leq 0.30$ ;
$0 < z'' \leq 0.70$.

9. Matériau composite enrichi (I-M) passivé comprenant le matériau composite enrichi de formule (I-M) selon l'une quelconque des revendications 1 à 8 et une couche superficielle de passivation.

10. Matériau composite enrichi (I-M) passivé selon la revendication 9 telle que la couche de passivation est à base de phosphate.

11. Electrode comprenant :

a. un matériau composite enrichi (I-M) ou leurs mélanges selon l'une quelconque des revendications 1 à 8 et/ou
b. un matériau composite enrichi (I-M) passivé ou leurs mélanges selon la revendication 9 ou 10.

12. Procédé de préparation du matériau composite enrichi de formule (I-M) selon l'une quelconque des revendications 1 à 8 comprenant l'étape de broyage de Si :

i. Soit avec ladite matrice composite de dispersion M,
Au moyen de z part de Si et de (1-z) part de la dite matrice composite de dispersion M,
Où z est tel que défini en revendication 1,
ii. Soit avec les autres éléments constituant la matrice composite ou avec les alliages contenant lesdits éléments.

**13.** Procédé selon la revendication 12 tel que lorsque le dit matériau composite enrichi (I-M) ne contient pas de Sn, Si est cobroyé avec Ti, Ni en proportions stœchiométriques.

**14.** Procédé selon la revendication 12 tel que lorsque le matériau composite enrichi (I-M) contient du Sn, ledit procédé comprend le broyage de Si avec les alliages $Ni_{3+n}Sn_4$ et $Ti_6Sn_5$ où n est compris entre 0,3 et 0,7.

**15.** Matrice composite de dispersion de formule (M1)

$$Ni_xTi_ySn_{1-(x+y)} \qquad (M1)$$

Où

$0.20 \leq x \leq 0.30$
$0.20 \leq y \leq 0.30$

**16.** Matrice composite de dispersion de formule (M1) selon la revendication 15 telle qu'elle répond à la formule $Ni_{(3+n)t}Ti_{6(1-t)}Sn_{(5-t)}$
Où n est compris entre 0,3 et 0,7 et t est compris entre 0,50 et 0,75

**17.** Matrice composite de dispersion de formule (M3)

$$Ni_{x'+a(x-x')}Ti_{y'+a(y-y')}Sn_{a(1-x-y)}Si_{(1-a)(1-x'-y')} \qquad (M3)$$

Où

$0.20 \leq x \leq 0.30$ ;
$0.20 \leq x' \leq 0.30$ ;
$0 < a < 1$ ;
$0.20 \leq y \leq 0.30$ ;
$0.20 \leq y' \leq 0.30$.

**18.** Procédé de préparation de la matrice composite de dispersion de formule (M1) selon la revendication 15 ou 16 comprenant le broyage des alliages $Ni_{3+n}Sn_4$ et $Ti_6Sn_5$ où n est compris entre 0,3 et 0,7

**19.** Procédé selon la revendication 18 comprenant l'étape de broyage des alliages $Ni_{3+n}Sn_4$ et $Ti_6Sn_5$ dans le rapport molaire $(Ni_{3+n}Sn_4)/(Ti_6Sn_5)=t/(1-t)$ où n est compris entre 0,3 et 0,7 et t est compris entre 0,50 et 0,75.

**20.** Procédé de préparation de la matrice composite de dispersion (M2) selon la revendication 2 comprenant le broyage des éléments Ni, Ti et Si en proportions stœchiométriques.

**21.** Procédé de préparation de la matrice composite de dispersion (M3) selon la revendication 2 ou 17 par broyage des alliages $Ni_{3+n}Sn_4$ où n est compris entre 0,3 et 0,7 et $Ti_6Sn_5$ et des éléments Ti, Ni et Si.

**22.** Procédé de préparation du matériau composite enrichi (I-M) passivé selon la revendication 9 ou 10 comprenant la mise en contact du matériau composite enrichi (I-M) avec une solution aqueuse de phosphate de métal alcalin éventuellement hydraté.

**Patentansprüche**

**1.** Verbundwerkstoff, angereichert mit elektrochemisch aktivem Si der Formel (I-M):

$$(1 - z) M + zSi \qquad (I-M)$$

wobei M eine Dispersionsverbundmatrix auf der Basis von Ti und Ni und mindestens einem Element ausgewählt aus Si und/oder Sn ist; und $0 < z \leq 0,70$.

2. Angereicherter Verbundwerkstoff (I-M) nach Anspruch 1, wobei die Dispersionsverbundmatrix M ausgewählt ist aus den folgenden Matrices:

    a. Dispersionsverbundmatrices auf Basis von Ni, Ti und Sn der Formel M1:

$$Ni_x Ti_y Sn_{1-(x+y)} \qquad (M1)$$

    wobei

        $0,20 \leq x \leq 0,30$;
        $0,20 \leq y \leq 0,30$;

    b. Dispersionsverbundmatrices auf Basis von Ni, Ti und Si der Formel M2:

$$Ni_{x'} Ti_{y'} Si_{1-(x'+y')} \qquad (M2)$$

    wobei

        $0,20 \leq x' \leq 0,30$;
        $0,20 \leq y' \leq 0,30$; und

    c. Gemischte Dispersionsverbundmatrices M3, die aus den Matrices M1 und M2, oben durch a. und b. definiert, gebildet sind, gemäß der Formel: M3-aM1+(1-a)M2
    wobei
    $0 < a < 1$.

3. Angereicherter Verbundwerkstoff (I-M) nach Anspruch 1 oder 2, wobei die Dispersionsverbundmatrix die Matrix M1 ist, der Formel (I-M1):

$$(1 - z) M1 + zSi \qquad (I\text{-}M1)$$

wobei z so ist, wie in Anspruch 1 definiert.

4. Angereicherter Verbundwerkstoff nach Anspruch 1, 2 oder 3 der Formel (I-M1):

$$Ni_{x(1-z)} Ti_{y(1-z)} Sn_{(1-z)(1-x-y)} Si_z \qquad (I\text{-}M1)$$

wobei

    $0,20 \leq x \leq 0,30$;
    $0,20 \leq y \leq 0,30$;
    $0 < z \leq 0,70$.

5. Angereicherter Verbundwerkstoff (I-M) nach Anspruch 1 oder 2, wobei die Dispersionsverbundmatrix die Matrix M2 ist,
der Formel (I-M2):

$$(1 - z') M2 + z'Si \qquad (I\text{-}M2)$$

wobei z' gleich z ist, wie in Anspruch 1 definiert.

6. Angereicherter Verbundwerkstoff nach Anspruch 1, 2 oder 5 der Formel (I-M2):

$$Ni_{x'(1-z')} Ti_{y'(1-z)} Si_{1-(x'+y')(1-z')} \qquad (I\text{-}M2)$$

wobei

$0,20 \leq x' \leq 0,30;$
$0,20 \leq y' \leq 0,30;$
$0 < z' \leq 0,70.$

7. Angereicherter Verbundwerkstoff (I-M) nach Anspruch 1 oder 2, wobei die Dispersionsverbundmatrix die Matrix M3 ist,
der Formel (I-M3):

$$(1 - z'') M3 + z'' Si \qquad (I\text{-}M3)$$

wobei z'' gleich z ist, wie in Anspruch 1 definiert.

8. Angereicherter Verbundwerkstoff nach Anspruch 1, 2 oder 7 der Formel (I-M3):

$$Ni_{[x'+a(x-x')](1-z'')}Ti_{[y'+a(y-y')](1-z'')}Sn_{a(1-x-y)(1-z'')}Si_{(1-a)(1-x'-y')(1-z'')+z''} \qquad (I\text{-}M3)$$

wobei

$0,20 \leq x \leq 0,30;$
$0,20 \leq x' \leq 0,30;$
$0 < a < 1$
$0,20 \leq y \leq 0,30;$
$0,20 \leq y' \leq 0,30;$
$0 < z'' \leq 0,70.$

9. Passivierter angereicherter Verbundwerkstoff (I-M), einen angereicherten Verbundwerkstoff der Formel (I-M) nach einem beliebigen der Ansprüche 1 bis 8 und eine Passivierungs-Oberflächenschicht umfassend.

10. Passivierter angereicherter Verbundwerkstoff (I-M) nach Anspruch 9, wobei die Passivierungs-Oberflächenschicht Phosphat-basiert ist.

11. Elektrode, umfassend:

a. einen angereicherten Verbundwerkstoff (I-M) oder ihre Mischungen nach einem beliebigen der Ansprüche 1 bis 8 und/oder
b. einen passivierten angereicherten Verbundwerkstoff (I-M) oder ihre Mischungen nach Anspruch 9 oder 10.

12. Verfahren zur Herstellung eines angereicherten Verbundwerkstoffs der Formel (I-M) nach einem beliebigen der Ansprüche 1 bis 8, umfassend einen Schritt der Zerkleinerung von Si:

i. sei es mit der Dispersionsverbundmatrix M,
mittels einem Anteil z von Si und einem Anteil (1-z) der besagten Dispersionsverbundmatrix M,
wobei z so ist, wie in Anspruch 1 definiert,
ii. sei es mit den anderen die Verbundmatrix bildenden Elementen oder mit den Legierungen, welche die Elemente enthalten.

13. Verfahren nach Anspruch 12, wobei, wenn das angereicherte Verbundmaterial (I-M) kein Sn enthält, Si zusammen mit Ti, Ni in stöchiometrischen Verhältnissen zerkleinert wird.

14. Verfahren nach Anspruch 12, wobei, wenn das angereicherte Verbundmaterial (I-M) Sn enthält, das Verfahren die Zerkleinerung von Si mit den Legierungen $Ni_{3+n}Sn_4$ und $Ti_6Sn_5$ umfasst, wobei n zwischen 0, 3 und 0,7 liegt.

15. Dispersionsverbundmatrix der Formel (M1)

$$Ni_x Ti_y Sn_{1-(x+y)} \qquad (M1)$$

wobei

$0{,}20 \leq x \leq 0{,}30$;
$0{,}20 \leq y \leq 0{,}30$;

16. Dispersionsverbundmatrix der Formel (M1) nach Anspruch 15 entsprechend der Formeln $Ni_{(3+n)t} Ti_{6(1-t)} Sn_{(5-t)}$ wobei n zwischen 0,3 und 0,7 liegt und t zwischen 0,50 und 0,75 liegt.

17. Dispersionsverbundmatrix der Formel (M3)

$$Ni_{x'+a(x-x')} Ti_{y'+a(y-y')} Sn_{a(1-x-y)} Si_{(1-a)(1-x'-y')} \qquad (M3)$$

wobei

$0{,}20 \leq x \leq 0{,}30$;
$0{,}20 \leq x' \leq 0{,}30$;
$0 < a < 1$;
$0{,}20 \leq y \leq 0{,}30$;
$0{,}20 \leq y' \leq 0{,}30$.

18. Verfahren zur Herstellung der Dispersionsverbundmatrix der Formel (M1) nach Anspruch 15 oder 16, die Zerkleinerung der Legierungen $Ni_{3+n}Sn_4$ und $Ti_6Sn_5$ umfassend, wobei n zwischen 0,3 und 0,7 liegt.

19. Verfahren nach Anspruch 18, die Zerkleinerung der Legierungen $Ni_{3+n}Sn_4$ und $Ti_6Sn_5$ in einem Molverhältnis $(Ni_{3+n}Sn_4)/(Ti_6Sn_5) = t/(1-t)$ umfassend, wobei n zwischen 0,3 und 0,7 liegt und t zwischen 0,50 und 0,75 liegt.

20. Verfahren zur Herstellung der Dispersionsverbundmatrix der Formel (M2) nach Anspruch 2, die Zerkleinerung der Elemente Ti, Ni und Si in stöchiometrischen Verhältnissen umfassend.

21. Verfahren zur Herstellung der Dispersionsverbundmatrix (M 3) nach Anspruch 2 oder 17 durch Zerkleinerung der Legierungen $Ni_{3+n}Sn_4$, wobei n zwischen 0,3 und 0,7 liegt, und $Ti_6Sn_5$ und den Elementen Ti, Ni und Si.

22. Verfahren zur Herstellung des passivierten angereicherten Verbundwerkstoffs (I-M) nach Anspruch 9 oder 10, das das Inkontaktbringen des angereicherten Verbundwerkstoffs (I-M) mit einer wässrigen Lösung eines, gegebenenfalls hydratisierten, Alkalimetallphosphats umfasst.

**Claims**

1. A composite material enriched with electrochemically active Si, having the formula (I-M):

$$(1-z) M + zSi \qquad (I-M)$$

Where M is a dispersion composite matrix based on Ti and Ni, and at least one element selected from Si and/or Sn; And $0 < z \leq 0.70$.

2. An enriched composite material (I-M) according to claim 1, such that the dispersion composite matrix M is selected from among the following matrices:

a. Ni-, Ti-, and Sn-based dispersion composite matrices having the formula M1:

$$Ni_x Ti_y Sn_{1-(x+y)} \qquad (M1)$$

Where

$0.20 \leq x \leq 0.30$;
$0.20 \leq y \leq 0.30$;

b. Ni-, Ti-, Si-based composite dispersion matrices having the formula M2:

$$Ni_{x'}Ti_{y'}Si_{1-(x'+y')} \qquad (M2)$$

Where

0.20≤x'≤0.30;
0.20≤y'≤0.30; and

c. Mixed dispersion composite matrices M3 constituted of the matrices M1 and M2 defined in a. and b. here above, according to the formula: M3=aM1+(1-a) M2
where
0 <a <1.

3. An enriched composite material (I-M) according to claim 1 or claim 2 such that the dispersion composite matrix is the matrix M1,
corresponding to the formula (I-M1):

$$(1-z)M1 +zSi \qquad (I-M1)$$

Where z is as defined in claim 1.

4. An enriched composite material according to claim 1, claim 2 or claim 3 having the formula (I-M1):

$$Ni_{x(1-z)}Ti_{y(1-z)}Sn_{(1-z)(1-x-y)}Si_{z} \qquad (I-M1)$$

Where

0.20≤x≤0.30;
0.20≤y≤0.30;
0<z≤0.70.

5. An enriched composite material according to claim 1 or claim 2 such that the dispersion composite matrix is the matrix M2,
Corresponding to the formula (I-M2):

$$(1-z')M2+z'Si \qquad (I-M2)$$

Where z' is equal to z, as defined in claim 1.

6. An enriched composite material according to claim 1, claim 2 or claim 5 having the formula (I-M2):

$$Ni_{x'(1-z')}Ti_{y'(1-z')}Si_{1-(x'+y')(1-z')} \qquad (I-M2)$$

Where

0.20≤x'≤0.30;
0.20≤y'≤0.30;
0<z'≤0.70.

7. An enriched composite material according to claim 1 or claim 2 such that the dispersion composite matrix is the matrix M3,
Corresponding to the formula (I-M3):

$$(1-z'')M3 +z''Si \qquad (I-M3)$$

Where z'' is equal to z, as defined in claim 1.

8. An enriched composite material according to claim 1, claim 2 or claim 7 having the formula (I-M3):

$$Ni_{[x'+a(x-x')](1-z'')}Ti_{[y'+a(y-y')](1-z'')}Sn_{a(1-x-y)(1-z'')}Si_{(1-a)(1-x'-y')(1-z'')+z''} \qquad (I\text{-}M3)$$

Where

$0.20 \leq x \leq 0.30;$
$0.20 \leq x' \leq 0.30;$
$0 < a < 1$
$0.20 \leq y \leq 0.30;$
$0.20 \leq y' \leq 0.30;$
$0 < z'' \leq 0.70.$

9. A passivated enriched composite material (I-M) comprising the enriched composite material having the formula (I-M) according to any one of claims 1 to 8 and a surface passivation layer.

10. A passivated enriched composite material (I-M) according to claim 9, wherein the passivation layer is phosphate-based.

11. An electrode comprising:

a. an enriched composite material (I-M) or mixtures thereof according to any one of claims 1 to 8 and/or
b. a passivated enriched composite material (I-M) or mixtures thereof according to claim 9 or claim 10.

12. A preparation method for preparing the enriched composite material having the formula (I-M) according to any one of claims 1 to 8 comprising the step of grinding of Si:

i. Either with the said dispersion composite matrix M,
By means of z part of Si and (1-z) part of the said dispersion composite matrix M, Where z is as defined in claim 1;
ii. Or with the other elements constituting the composite matrix or with the alloys containing the said elements.

13. A method according to claim 12 such that when the said enriched composite material (I-M) does not contain Sn, Si is coground with Ti, Ni in stoichiometric proportions.

14. A method according to claim 12, such that when the enriched composite material (I-M) contains Sn, the said method comprises the grinding of Si with the alloys $Ni_{3+n}Sn_4$ and $Ti_6Sn_5$ where n is comprised between 0.3 and 0.7.

15. A dispersion composite matrix having the formula (M1)

$$Ni_xTi_ySn_{1-(x+y)} \qquad (M1)$$

Where

$0.20 \leq x \leq 0.30$
$0.20 \leq y \leq 0.30$

16. A dispersion composite matrix having the formula (M1) according to claim 15, such that it corresponds to the formula $Ni_{(3+n)t}Ti_{e(1-t)}Sn_{(5-t)}$
Where n is comprised between 0.3 and 0.7 and t is comprised between 0.50 and 0.75

17. A dispersion composite matrix having the formula (M3)

$$Ni_{x'+a(x-x')}Ti_{y'+a(y-y')}Sn_{a(1-x-y)}Si_{(1-a)(1-x'-y')} \qquad (M3)$$

Where

$0.20 \leq x \leq 0.30;$
$0.20 \leq x' \leq 0.30;$

$0 < a < 1$ ;
$0.20 \leq y \leq 0.30$;
$0.20 \leq y' \leq 0.30$.

18. A preparation method for preparing the dispersion composite matrix having the formula (M1) according to claim 15 or claim 16 comprising the grinding of the alloys $Ni_{3+n}Sn_4$ and $Ti_6Sn_5$ where n is comprised between 0.3 and 0.7

19. A method according to claim 18 comprising the step of grinding of the alloys $Ni_{3+n}Sn_4$ and $Ti_6Sn_5$ in the molar ratio $(Ni_{3+n}Sn_4)/(Ti_6Sn_5)=t/(1-t)$ where n is comprised between 0.3 and 0.7 and t is comprised between 0.50 and 0.75.

20. A preparation method for preparing the dispersion composite matrix (M2) according to claim 2, comprising the grinding of the elements Ni, Ti and Si in stoichiometric proportions.

21. A preparation method for preparing the dispersion composite matrix (M3) according to claim 2 or claim 17 by grinding the alloys $Ni_{3+n}Sn_4$ where n is comprised between 0.3 and 0.7 and $Ti_6Sn_5$, and the elements Ti, Ni and Si.

22. A preparation method for preparing the passivated enriched composite material (I-M) according to claim 9 or claim 10, comprising the placing in contact of the enriched composite material (I-M) with an aqueous solution of alkali metal phosphate, which may optionally be hydrated.

Fig. 1

**Ternaire Si/Ti/Ni**

Tf = 1414°C

Si

Isotherme 1100°C

**Fig. 2**

**Fig. 3**

EP 3 458 622 B1

Fig. 4

EP 3 458 622 B1

**Fig. 5**

EP 3 458 622 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006021714 A